# EUROPEAN PATENT APPLICATION

(11) **EP 2 579 361 A1**
(43) Date of publication of application: **10.04.2013**
(21) Application number: 11789630.8
(22) Date of filing: 19.05.2011
(51) Int. Cl.: H01M 2/36

(54) **DEVICE FOR SUPPLYING ELECTROLYTE SOLUTION**

(30) Priority: 02.06.2010 JP 2010126783
(71) Applicant: Nissan Motor Co., Ltd, Yokohama-shi, Kanagawa 221-0023 (JP)
(72) Inventor: YAMADA, Makoto, Atsugi-shi Kanagawa 243-0123 (JP); SUGIYAMA, Masahiko, Atsugi -shi ,Kanagawa 243-0123 (JP); WAKAMATSU, Kuniyoshi, Atsugi-shi,Kanagawa 243-0123 (JP); MIURA, Akinori, Atsugi-shi,Kanagawa 243-0123 (JP)
(74) Representative: Grünecker, Kinkeldey, Stockmair & Schwanhäusser
(86) International application number: PCT/JP2011/061520
(87) International publication number: WO 2011/152221

(57) **Abstract**

The present invention concerns an electrolyte supplying apparatus including a tank which stores an electrolyte, a supply-receiving unit to which the electrolyte in the tank is supplied, a pipe which connects the tank and the supply-receiving unit, a gas pressure feeding unit which feeds an inert gas under pressure into the tank so that the electrolyte in the tank is supplied to the supply-receiving unit via the pipe by increasing an internal pressure of the tank, and a mass flowmeter which is provided in the pipe and detects a mass flow rate of a fluid flowing in the pipe.

## Description

### FIELD OF THE INVENTION

The present invention relates to an electrolyte supplying apparatus.

### BACKGROUND

A conventional electrolyte supplying apparatus for supplying an electrolyte stored in a main tank to a battery case of a lead-acid battery via a sub-tank is disclosed in JP8-236144A. In this conventional electrolyte supplying apparatus, a fluid level sensor is provided in the sub-tank and the remaining amount of the electrolyte in the sub-tank is detected by the fluid level sensor.

### SUMMARY

There is a possibility that solid impurities in the electrolyte are precipitated at the bottom of the interior of the tank storing the electrolyte. Thus, it is preferable to replenish the electrolyte by replacing the old tank with a new one when the remaining amount of the electrolyte in the tank becomes less than a predetermined amount so as not to supply the electrolyte including impurities. To that end, the remaining mount of the electrolyte in the tank needs to be detected.

However, in trying to detect the remaining amount of the electrolyte in the tank by the fluid level sensor as before, the fluid level sensor mounted in the old tank needs to be mounted in the new tank at the time of replacing the tank. This causes a problem that the electrolyte in the tank is exposed to air during this replacing operation and impurities such as moisture and dirt in the air are mixed into the electrolyte to deteriorate battery performances.

The present invention was developed in view of such problem and an object thereof is to suppress the mixture of impurities such as moisture and dirt in air into an electrolyte at the time of replacing a tank.

To achieve the above object, an electrolyte supplying apparatus according to the present invention includes a tank which stores an electrolyte, a supply-receiving unit to which the electrolyte in the tank is supplied, a pipe which connects the tank and the supply-receiving unit, a gas pressure feeding unit which feeds an inert gas under pressure into the tank so that the electrolyte in the tank is supplied to the supply-receiving unit via the pipe by increasing an internal pressure of the tank, and a mass flowmeter which is provided in the pipe and detects a mass flow rate of a fluid flowing in the pipe.

An embodiment and advantages of the present invention are described in detail below with reference to the accompanying drawing.

### BRIEF DESCRIPTION OF DRAWINGS

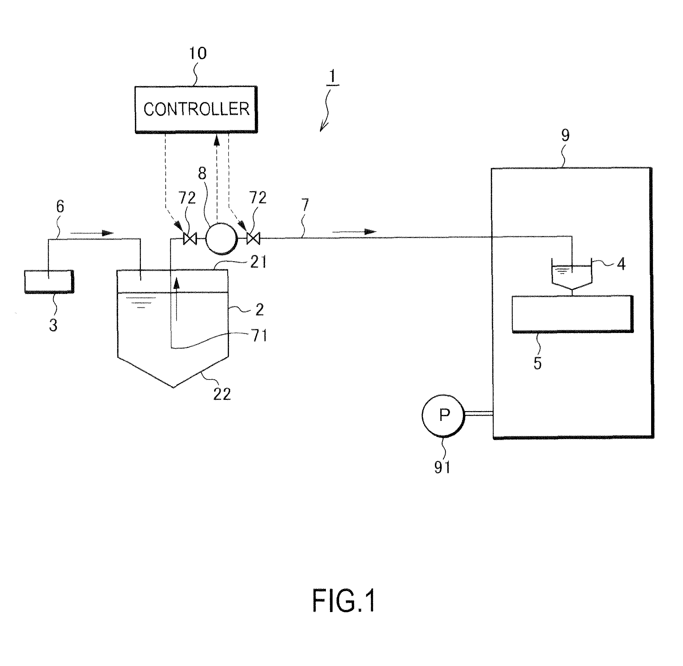

FIG. 1 is a schematic configuration diagram of an electrolyte supplying apparatus according to one embodiment of the present invention.

### DEATILED DESCRIPTION

Hereinafter, one embodiment of the present invention is described with reference to the drawing and the like.

FIG. 1 is a schematic configuration diagram of an electrolyte supplying apparatus 1 according to one embodiment of the present invention for supplying an electrolyte to a battery case of a lithium ion secondary battery. For example, a laminated film package or the like can be cited as the battery case of the lithium ion secondary battery.

The electrolyte supplying apparatus 1 includes a main tank 2, a high-pressure gas tank 3, a sub-tank 4, an electrolyte injector 5, a gas supply pipe 6 connecting the main tank 2 and the high-pressure gas tank 3, an electrolyte pressure feed pipe 7 connecting the main tank 2 and the sub-tank 4, a mass flowmeter 8, a vacuum chamber 9 and a controller 10.

The main tank 2 includes a removable upper lid 21 and stores the electrolyte to be supplied to the battery case of the lithium ion secondary battery. A bottom wall 22 of the main tank 2 is formed to have a conical shape so that contaminants such as dirt, mote and dust mixed into the electrolyte collectively precipitate in the center of the bottom wall 22.

The electrolyte is obtained by dissolving lithium salt in a volatile and flammable organic solvent containing no moisture. If moisture as an impurity is mixed into the electrolyte, the deterioration of the lithium ion secondary battery may be accelerated such as through a reaction of that moisture with a current collector metal of the lithium ion secondary battery. Thus, an inert gas which is less likely to contain moisture is filled in the main tank 2 in advance so that air (oxygen) containing moisture is not mixed into the main tank 2. In this embodiment, nitrogen is used as the inert gas.

The high-pressure gas tank 3 stores a high-pressure nitrogen gas to be supplied into the main tank 2 via the gas supply pipe 6. The nitrogen gas is supplied into the main tank 2 utilizing a differential pressure between the high-pressure gas tank 3 and the main tank 2, whereby an internal pressure of the main tank 2 is increased and the electrolyte stored in the main tank 2 is fed under pressure to the sub-tank 4 via the electrolyte pressure feed pipe 7.

The sub-tank 4 and the electrolyte injector 5 are installed in the chamber 9 whose interior is kept vacuum. A vacuum pump 91 for reducing a pressure in the chamber 9 to keep the interior vacuum is connected to the chamber 9.

The sub-tank 4 temporarily stores the electrolyte fed under pressure via the electrolyte pressure feed pipe 7 to supply the electrolyte to the electrolyte injector 5. By temporarily storing the electrolyte in the sub-tank 4, a gas moves upward in the sub-tank 4 and the electrolyte moves downward in the sub-tank 4 even if the gas such as nitrogen is fed under pressure. Thus, the gas and the electrolyte can be separated.

Further, by installing the sub-tank 4 in the chamber 9 whose interior is kept vacuum, the gas such as nitrogen in the electrolyte temporarily stored in the sub-tank 4 can be actively discharged into the chamber 9 having a lower atmospheric pressure. Thus, the gas such as nitrogen in the electrolyte temporarily stored in the sub-tank 4 can be more effectively separated from the electrolyte.

The electrolyte injector 5 injects the electrolyte supplied from the sub-tank 4 to the battery case of the lithium ion secondary battery fixed to a jig.

If the amount of the electrolyte stored in the main tank 2 becomes small, it is necessary to replenish that main tank 2 with the electrolyte or replace that main tank 2 with another main tank 2 filled with the electrolyte.

However, by a method for replenishing the main tank 2 with the electrolyte by removing the upper lid 21 of the main tank 2, the electrolyte may be exposed to air during replenishment and moisture and contaminants in the air may be mixed as impurities. If the moisture is mixed into the electrolyte, the deterioration of the lithium ion secondary battery may be accelerated as described above. If the contaminants are mixed in, a part where the contaminants are mixed in may, for example, look swollen, thereby causing an external appearance failure. Thus, a method for replacing the main tank 2 with another main tank 2 filled with the electrolyte in advance when the remaining amount becomes small is more desirable.

It is desirable to replace the main tank 2 after the electrolyte in the main tank 2 is used up as much as possible. However, contaminants mixed into the electrolyte may be precipitated near the bottom wall 22 of the main tank 2. Thus, it is desirable to make a replacement when the remaining amount falls below a predetermined amount so that the electrolyte mixed with the contaminants is not fed under pressure. To that end, the remaining amount of the electrolyte in the main tank 2 needs to be detected.

Here, for example, in trying to detect the remaining amount of the electrolyte by providing a fluid level sensor in the main tank 2, it is necessary to remove the fluid level sensor from the old main tank 2 and mount the removed fluid level sensor in a new main tank 2. Then, the electrolyte is, after all, exposed to the air when the fluid level sensor is mounted, whereby moisture and contaminants in the air may be mixed in as impurities.

Accordingly, in this embodiment, the remaining amount of the electrolyte in the main tank 2 is detected by providing the mass flowmeter 8 in the electrolyte pressure feed pipe 7.

An electrolyte suction part 71 formed at one end of the electrolyte pressure feed pipe 7 is arranged inside the main tank 2 and somewhat above the bottom wall 22 so that the electrolyte is not fed under pressure together with the contaminants precipitated on the bottom wall 22 of the main tank 2.

The mass flowmeter 8 is provided in the electrolyte pressure feed pipe 7 and detects the mass (hereinafter referred to as a "mass flow rate") [kg/s] of a fluid flowing in the electrolyte pressure feed pipe 7 per unit time. Since nitrogen is fed under pressure in the electrolyte pressure feed pipe 7 when the remaining amount of the electrolyte in the main tank 2 decreases and the fluid level becomes lower than the electrolyte suction part 71 of the electrolyte pressure feed pipe 7, a detection value of the mass flowmeter 8 becomes smaller. Accordingly, whether or not the remaining amount of the electrolyte has become smaller than a predetermined amount can be judged based on the detection value of the mass flowmeter 8. Note that a Coriolis mass flowmeter 8 is used as the mass flowmeter 8 in this embodiment.

Control valves 72 are provided before and after the mass flowmeter 8 in the electrolyte pressure feed pipe 7. The control valves 72 are opened and closed based on the detection value of the mass flowmeter 8. Specifically, when it is judged that nitrogen flows in the electrolyte pressure feed pipe 7 based on the detection value of the mass flowmeter 8, i.e. when the detection value of the mass flowmeter 8 becomes smaller than a predetermined value, the both control valves 72 are closed. This can suppress the feed of the gas such as nitrogen under pressure to the sub-tank 4.

The controller 10 is configured by a microcomputer including a central processing unit (CPU), a read only memory (ROM), a random access memory (RAM) and an input/output interface (I/O interface). A mass flow rate detected by the mass flowmeter 8 is input to the controller 10. The controller 10 opens and closes the control valves 72 based on the input mass flow rate. Specifically, the control valves 72 are closed when the detection value of the mass flowmeter 8 becomes smaller than the predetermined value as described above.

According to this embodiment described above, the electrolyte in the main tank 2 is fed under pressure to a supply-receiving unit such as the sub-tank 4 by supplying the inert gas such as nitrogen to the main tank 2 and the remaining amount of the electrolyte in the main tank 2 is detected by the mass flowmeter 8 provided in the electrolyte pressure feed pipe 7.

By this, it can be detected by the mass flowmeter 8 that the fluid flowing in the electrolyte pressure feed pipe 7 has changed from the electrolyte to the nitrogen gas. When the fluid level of the electrolyte in the main tank becomes lower than the electrolyte suction part 71, the nitrogen gas flows in the electrolyte pressure feed pipe 7. Thus, if the nitrogen gas flows in the electrolyte pressure feed pipe 7, it can be judged that the fluid level of the electrolyte in the tank has become lower than the position of the electrolyte suction part 71 and that the remaining amount of the electrolyte in the tank has fallen to or below the predetermined amount.

Thus, by simply replacing the old main tank 2 with the new main tank 2 at the time of replacing the main tank 2, the remaining amount of the electrolyte in the main tank 2 can be detected. Accordingly, unlike the detection of the remaining amount of the electrolyte in the main tank 2 by the fluid level sensor, there is no need for an operation of mounting the fluid level sensor, wherefore the electrolyte is not exposed to the air. Since this can suppress the mixture of moisture and contaminants in the air into the electrolyte in the main tank 2, the deterioration (output reduction and capacity reduction) and an external appearance failure of the lithium ion battery can be suppressed.

Further, by temporarily storing the electrolyte from the main tank 2 in the supply-receiving unit such as the sub-tank 4, the gas moves upward in the sub-tank 4 and the electrolyte moves downward in the sub-tank 4 even if the gas such as nitrogen is fed under pressure. Thus, the gas and the electrolyte can be separated.

Further, since the gas in the electrolyte can be actively discharged into the chamber 9 having a lower atmospheric pressure by installing the sub-tank 4 in the chamber 9 whose interior is kept vacuum, the gas can be more effectively separated from the electrolyte.

When the detection value of the mass flowmeter 8 becomes smaller than the predetermined value at which it can be judged that nitrogen flows in the electrolyte pressure feed pipe 7, the control valves 72 provided before and after the mass flowmeter 8 in the electrolyte pressure feed pipe 7 are closed. This can suppress the feed of the gas such as nitrogen under pressure to the sub-tank 4.

Further, the Coriolis mass flowmeter 8 was used as the mass flowmeter 8. It is also possible to use a hot-wire mass flowmeter 8 as the mass flowmeter 8, but the use of the Coriolis mass flowmeter is more preferable for the following reason.

That is, in the case of a hot-wire mass flowmeter, the mass flow rate is detected by inserting a thermocouple made of metal into the electrolyte pressure feed pipe 7, wherefore there is a possibility that the thermocouple is corroded by an acid electrolyte and a mass flow rate cannot be measured. Note that a volume flow meter cannot achieve the effect of this embodiment since there is no change in volume flow rate regardless of whether an electrolyte which is a fluid passes or nitrogen which is a gas passes.

Further, the bottom wall 22 of the main tank 2 is formed to have a conical shape. This allows contaminants such as dirt, mote and dust mixed into the electrolyte to collectively precipitate in the center of the bottom wall 22.

Further, the electrolyte suction part 71 of the electrolyte pressure feed pipe 7 is arranged somewhat above the bottom wall 22 of the main tank 2 so that the electrolyte is not fed under pressure together with the contaminants precipitated on the bottom wall 22 of the main tank 2. Since this can suppress the mixture of contaminants into the electrolyte fed under pressure to the supply-receiving unit such as the sub-tank 4, an external appearance failure of the lithium ion battery can be further suppressed.

Although this invention has been described by way of the specific embodiment, this invention is not limited to the above embodiment. It is possible for a person skilled in the art to modify or alter the above embodiment in various manners within the technical scope of the present invention.

For example, although the high-pressure nitrogen gas is fed under pressure to the main tank 2 utilizing a differential pressure between the high-pressure gas tank 3 and the main tank 2 in the above embodiment, it may be fed under pressure using a pump or the like.

Further, although the bottom wall 22 of the main tank 2 is formed to have a conical shape in the above embodiment, the shape of the bottom wall 22 of the main tank 2 is not limited to this and the bottom wall 22 only has to be inclined at a predetermined angle so that contaminants such as dirt, mote and dust mixed into the electrolyte collectively precipitate to the bottom of the main tank 2.

For the above description, the contents of Japanese Patent Application No. 2010-126783 filed on June 2, 2010 are hereby incorporated by reference.

## Claims

1. An electrolyte supplying apparatus, comprising:
a tank (2) which stores an electrolyte;
a supply-receiving unit (4) to which the electrolyte in the tank (2) is supplied;
a pipe (7) which connects the tank (2) and the supply-receiving unit (4);
a gas pressure feeding unit (3) which feeds an inert gas under pressure into the tank (2) so that the electrolyte in the tank (2) is supplied to the supply-receiving unit (4) via the pipe (7) by increasing an internal pressure of the tank (2); and
a mass flowmeter (8) which is provided in the pipe (7) and detects a mass flow rate of a fluid flowing in the pipe (7).

2. The electrolyte supplying apparatus according to claim 1, wherein the supply-receiving unit (4) is installed inside a pressure-reduced container (9).

3. The electrolyte supplying apparatus according to claim 1, comprising a control valve (72) which is provided in the pipe (7) and closed when a detection value of the mass flowmeter (8) becomes smaller than a predetermined value at which it can be judged that the inert gas is flowing in the pipe (7).

4. The electrolyte supplying apparatus according to claim 1, wherein the mass flowmeter (8) is a Coriolis mass flowmeter.

5. The electrolyte supplying apparatus according to claim 1, wherein:
the tank (2) has a bottom wall (22) which is inclined at a predetermined angle so that solid impurities in the electrolyte collectively precipitate to the bottom of the tank (2); and
one end (71) of the pipe (7) is arranged above the bottom wall (22) in the tank (2) so that the solid impurities are not supplied to the supply-receiving unit (4).
